# EUROPÄISCHE PATENTSCHRIFT

(11) **EP 1 063 828 B1**
(45) Veröffentlichungstag und Bekanntmachung des Hinweises auf die Patenterteilung: **11.10.2006**
(21) Anmeldenummer: 00110067.6
(22) Anmeldetag: 12.05.2000
(51) Int. Cl.: H04L 29/06, H04L 12/26

(54) **Verfahren zum Erlernen des einer Protokollimplementierung zugrundeliegenden endlichen Automaten**
Method for identifying the underlying finite state machines of a protocol implementation
Procédé pour identifier des machines à état fini d'une mise en oeuvre d'un protocol

(30) Priorität: 25.06.1999 DE 19929166
(43) Veröffentlichungstag der Anmeldung: 27.12.2000
(60) Teilanmeldung: 04011450.6
(73) Patentinhaber: Tektronix Berlin GmbH & Co. KG, 13629 Berlin (DE)
(72) Erfinder: Musial, Marek, 10551 Berlin (DE)
(74) Vertreter: Schurack, Eduard F.

(56) Entgegenhaltungen:
- WO-A-98/11702
- WO-A-98/12852
- GB-A- 2 302 487
- US-A- 5 519 647
- ABSILLIS L ET AL: "ADVANCED PROTOCOL ANALYSERS" INFORMATION NETWORKS AND DATA COMMUNICATION. PROCEEDINGS OF THE IFIP TC6 INTERNATIONAL CONFERENCE ON INFORMATION NETWORKS AND DATA COMMUNICATION, FUNCHAL, MADEIRA ISLAND, PORTUGAL, APR. 18 - 21, 1994, PROCEEDINGS OF THE IFIP TC6 INTERNATIONAL CONFERE, Bd. CONF. 5, 18. April 1994 (1994-04-18), Seiten 311-330, XP000593300 ISBN: 0-444-81869-3
- SALEH K ET AL: "Recovery of communications protocol design from protocol execution traces" ENGINEERING OF COMPLEX COMPUTER SYSTEMS, 1996. PROCEEDINGS., SECOND IEEE INTERNATIONAL CONFERENCE ON MONTREAL, QUE., CANADA 21-25 OCT. 1996, LOS ALAMITOS, CA, USA,IEEE COMPUT. SOC, US, 21. Oktober 1996 (1996-10-21), Seiten 265-272, XP010201525 ISBN: 0-8186-7614-0
- "Useful Equations for Linear Regression" INTERNET, [Online] 26. Januar 1999 (1999-01-26), Seiten 1-3, XP002206531 Gefunden im Internet: <URL:http://hesweb1.med.virginia.edu/biost at/teaching/biostat.mod/formulas.pdf> [gefunden am 2002-07-17]

## Beschreibung

Die vorliegende Erfindung betrifft ein Verfahren zum Erlernen des einer Protokollimplementierung zugrundeliegenden endlichen Automaten.

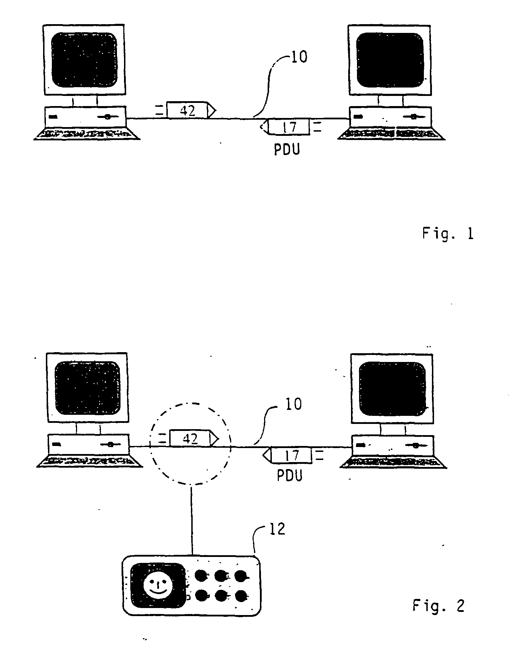

Es ist bekannt, daß Kommunikationspartner gemäß.einem Kommunikationsprotokoll untereinander einen Datenaustausch vornehmen. Eine Anordnung zur Durchführung eines Datenaustausches auf diese Weise ist in Fig. 1 dargestellt. Kommunikationspartner A und B kommunizieren miteinander über ein Kommunikationsmedium 10, z.B. eine elektrische Leitung, indem sie gemäß einem Kommunikationsprotokoll Nachrichten oder Protokolldateneinheiten (Protocol Data Units, PDUs) austauschen. Das Kommunikationsprotokoll stellt ein vollständiges Regelwerk für das geforderte Verhalten jedes Kommunikationspartners A und B dar. Die Kommunikationspartner A und B sind Instanzen im Sinne des OSI-Referenzmodells, das im einzelnen in "ISO. Information Processing Systems - Open Systems Interconnection - Basis Reference Model" International Standard ISO/IS 7498, ISO, 1984 beschrieben ist. Das geeignete und übliche Konzept zur Definition von Kommunikationsprotokollen ist der erweiterte endliche Automat (Extended Finite State Machine, EFSM) wie er z.B. im Buch von D. Hogrefe (Estelle, LOTOS und SDL: "Standard-Spezifikationssprachen für verteilte Systeme", Springer Compass. Springer Verlag - Berlin, Heidelberg, New York etc. 1989) beschrieben ist. Er stellt eine Verallgemeinerung des z.B. "Proceedings of the 1994 International Symposium on Software Testing and Analysis" (ISSTA), ACM SIGSOFT Software Engineering Notes, Special issue, Seiten 109 bis 124, August 1994 erklärten endlichen Automaten (Finite State Machine, FSM) dar.

Voraussetzung für das einwandfreie Funktionieren digitaler Kommunikation ist, daß sich alle beteiligten Kommunikationspartner gemäß gemeinsamer Regeln, den sogenannten Protokollen, verhalten. Aufgrund der Offenheit, Diversität, Komplexität und Bandbreite moderner Kommunikationssysteme kommt der Entwicklung, Normung und Beschreibung von Protokollen eine ständig größere Bedeutung zu. Im selben Maße vermehren sich die Fehlerquellen, die zu mehr oder weniger großen Störungen in Kommunikationssystemen führen. Zu typischen Fehlerquellen, die sich in modernen Breitbandkommunikationssystemen immer wieder zeigen, gehören:
- Fehlfunktionen aufgrund des Einsatzes von Protokollen oder Protokollvarianten, die im gegebenen Kontext einer Systeminstallation nicht benützt werden dürften;
- Fehlfunktionen aufgrund von konfigurierbaren Protokollparametern, die für den gegebenen Kontext einer Systeminstallation inkompatibel eingestellt wurden;
- Fehlfunktionen aufgrund von Überlastsituationen, in denen einzelne Komponenten des Kommunikationssystems gezwungen sind, Daten zu verwerfen.

Die Erfahrung zeigt, daß alle Bemühungen die einwandfreie Funktion kommunikationsrelevanter Hard- und Software vor der Markteinführung durch geeignete Entwicklungsverfahren und aktive Testprozeduren sicherzustellen, nicht in jedem Fall Erfolg haben. Daraus entsteht der Bedarf nach Hilfsmitteln zur Fehlersuche, die im laufenden Betrieb eines Telekommunikationssystems eingesetzt werden und Fehlfunktionen erkennen, einer Systemkomponente zuordnen und Anhaltspunkte zu ihrer Beseitigung liefern können.

Verfügbare Werkzeuge für Messungen im laufenden Betrieb, meist als Protokolltester bezeichnet, haben gemeinsam, daß sie nicht das vollständige Kommunikationsverhalten gegen das Soll-Verhalten validieren können, sondern ein erhebliches Maß an manueller Prüfarbeit erfordern. Hier besteht also ein erhebliches Potential, eine sehr unangenehme manuelle Suchtätigkeit zu automatisieren.

In diesem Zusammenhang wird auf die GB-A-2 302 487 verwiesen, die einen Protokollanalysator zeigt, der ein neuronales Netzwerk, einen Speicher mit korrekten Protokollnachrichten und einen Speicher mit fehlerhaften Protokollnachrichten enthält. Das neuronale Netzwerk lernt anhand der gespeicherten Nachrichten, korrekte Nachrichten von fehlerhaften zu unterscheiden.

Ferner sei auf den Artikel "Advanced Protocol Analysers" von Absillis L. et al. in: Information Networks and Data Communication, Proceedings of the IFIP TC6 international conference, Bd. Conf. 5, 18. April 1994, Seiten 311-330, XP000593300 ISBN:0-444-81869-3 verwiesen, der ein als "channel monitor" bezeichnetes Verfahren offenbart, bei dem die von einem Knoten in einem Netzwerk empfangenen und gesendeten PDUs mittels eines Protokollanalysators erfasst werden und damit ein Teil des äußeren Verhaltens der Protokollimplementationen in dem Knoten überwacht wird. Daraus wird das innere Verhalten des Protokolls für den überwachten Knoten rekonstruiert. Dazu werden die Protokollimplementationen als Black-Box betrachtet und ihr Verhalten mit ihrer Spezifikation verglichen.

Schließlich wird noch auf den Artikel "Recovery of Communications Protocol Design from Protocol Execution Traces" von Saleh K. et al. in Engineering of Complex Computer Systems, 1996. Proceedings., Second IEEE International Conference on Montreal, Que., Canada 21-25 Oct.1996, Los Alammitos, CA, USA, IEEE Comput. Soc, US, 21. Oktober 1996, Seiten 265-272, XP 010201525 ISBN:0-8186-7614-0 verwiesen, der ein Verfahren zur Rekonstruktion eines Protokolldesigns aus dem ausführbaren Programm offenbart. Dazu werden Informationen während der tatsächlichen Ausführung des Systems in Form einer Ablaufverfolgung gesammelt, die die Geschichte der an verschiedenen Stellen des Systems auftretenden beobachtbaren Ereignisse aufzeichnet. Die Informationen werden zur Ausführungszeit an verschiedenen Beobachtungspunkten des Systems gesammelt und neu geordnet, um die zeitliche Ordnung der gesammelten Ereignisse widerzuspiegeln. Danach wird ein Synthesealgorithmus eines kommunizierenden endlichen Automaten (Communicating Finit State Machine, CFSM) angewendet, um das Protokolldesign und die Servicedefinition zu erzeugen. Der Algorithmus beginnt mit dem Anfangszustand. Nach jedem Ereignis wird der durch dieses Ereignis erreichte nächste Zustand bestimmt, indem zuerst überprüft wird, ob bereits ein ähnlicher Übergang existiert. Ist dies nicht der Fall, wird ein neuer Zustand geschaffen und zu dem CFSM hinzugefügt. Sobald das nächste Ereignis einem in einer Liste mit anfänglichen Ereignissen aufgeführten Ereignis entspricht, wird die Sequenz als abgeschlossen betrachtet, und es wird eine Äquivalenzreduktion durchgeführt, um die Zahl der Zustände des CFSM zu reduzieren.

Der vorliegenden Erfindung liegt die Aufgabe zugrunde, ein Verfahren bereitzustellen, mit dem das Soll-Verhalten, das als Grundlage der Überprüfung einer Kommunikation dient, möglichst schnell und kostengünstig einem Analysegerät zur Verfügung gestellt werden kann. Insbesondere soll dies auch möglich sein, wenn das zugrundeliegende Protokoll nicht in Form einer formalen, maschinentauglichen Spezifikation vorliegt.

Diese Aufgabe wird gelöst durch ein Verfahren mit den Merkmalen des unabhängigen Anspruchs 1.

Die erfindungsgemäße Lösung bietet den Vorteil, daß, beispielsweise wenn nicht genügend Ressourcen zur Verfügung stehen, durch die Verwendung eines maschinellen Lernverfahrens nahezu ohne menschliche Entwurfsarbeit Prüfalgorithmen entwickelt werden können. Im Hinblick darauf, daß eine sehr große Zahl von Protokollen und Protokollvarianten existiert, so daß sich nicht für jede einzelne davon ein signifikanter Entwicklungsaufwand für eine Prüfmaschine lohnt, ist dies besonders vorteilhaft.

In der immer schnelleren Weiterentwicklung von Kommunikationssystemen und -standards beobachtet man häufig ein Nebeneinander von international standardisierten Protokollen und proprietären Entwicklungen, welche einen vorhandenen Bedarf möglichst schnell, d.h. vor der Konkurrenz und erst recht vor Abschluß eines meist langwierigen Standardisierungsprozesses, erfüllen sollen. Für derartige proprietäre Protokollvarianten sind formale Spezifikationen häufig nicht oder nur zu einem hohen Preis vom Hersteller zu beschaffen. Mit der vorliegenden Erfindung kann auch ohne formale Spezifikation das Soll-Verhalten ermittelt und für die Analyse zur Verfügung gestellt werden.

Gemäß der vorliegenden Erfindung umfaßt ein Verfahren zum Erlernen des einer Protokollimplementierung zugrundeliegenden endlichen Automaten die folgenden Schritte: Zunächst werden Zeitpunkte in einer PDU-Typen umfassenden Beispielkommunikation zwischen zwei jeweils aufeinander folgenden PDUs definiert. Danach werden die Zeitpunkte innerhalb der Beispielkommunikation in Äquivalenzklassen zusammengefasst, wobei zur Bildung der Äquivalenzklassen ein Ähnlichkeitsmaß zwischen jeweils zwei zeitpunkten innerhalb der Beispielkommunikation berechnet wird, das von der Länge der für beide Zeitpunkte übereinstimmenden, die Zeitpunkte umgebenden PDU-Typen-Sequenz abhängt. Anschließend werden die Äquivalenzklassen als Zustände des erlernten Automaten verwendet.

Dies ermöglicht das Erlernen der Abfolge der Nachrichtentypen - ohne Rücksicht auf die Nachrichteninhalte. Es werden demnach die Zustände und Zustandsübergänge eines endlichen Automaten erlernt.

Eine Ähnlichkeitsrelation kann durch eine untere Schranke für den Wert eines Ähnlichkeitsmaßes zwischen jeweils zwei Zeitpunkten innerhalb der Beispielkommunikation so definiert werden, daß zwei Zeitpunkte die Ähnlichkeitsrelation erfüllen, wenn das Ähnlichkeitsmaß zwischen diesen beiden zeitpunkten größer oder gleich der unteren Schranke ist.

Eine Äquivalenzrelation zur Bildung der Äquivalenzklassen kann bevorzugt dadurch berechnet werden, daß die transitive Hülle einer Ähnlichkeitsrelation zwischen den Zeitpunkten innerhalb der Beispielkommunikation gebildet wird.

Bevorzugt werden die PDUs der Beispielkommunikation als Zustandsübergänge des erlernten Automaten eingetragen, und zwar jeweils als Übergang von demjenigen Zustand, in dessen Äquivalenzklasse der Zeitpunkt unmittelbar vor der betreffenden PDU liegt, zu demjenigen Zustand, in dessen Äquivalenzklasse der Zeitpunkt unmittelbar nach der betreffenden PDU liegt, markiert mit dem betreffenden PDU-Typ. Hierbei werden Übergänge, die in Ausgangs- und Folgezustand und im PDU-Typ übereinstimmen, nur einmal eingetragen.

Die erwähnten Verfahrensschritte bzw. Kombinationen daraus können mehrfach für überlappende Teilbereiche der Beispielkommunikation durchgeführt werden, wobei die Ähnlichkeitsrelationen jeweils zweier überlappender Teilbereiche zu einer gemeinsamen Äquivalenzrelation vereinigt werden.

Weitere vorteilhafte Ausführungsformen ergeben sich aus den Unteransprüchen.

Ein Ausführungsbeispiel wird im folgenden unter Hinweis auf die beigefügten Zeichnungen näher beschrieben:

Es stellen dar:
- Fig. 1: ein Blockschaltbild einer Anordnung aus dem Stand der Technik;
- Fig. 2: ein Blockschaltbild einer Anordnung zur Durchführung des erfindungsgemäßen Verfahrens;
- Fig. 3: den logischen Kontext der Spuranalyse;
- Fig. 4: die Zusammensetzung einer PDU aus PDU-Typ und Nachrichtenattributen;
- Fig. 5: eine Beispielkommunikation, beschränkt auf die PDU-Typen, mit dazwischen definierten Zeitpunkten;
- Fig. 6: die für fünf Zeitpunkte der Beispielkommunikation von Fig. 5 aufgestellte Ähnlichkeitsmatrix;
- Fig. 7: der sich aus der Ähnlichkeitsmatrix von Fig. 6 ergebende endliche Automat;
- Fig. 8: der sich aus der kompletten Beispielkommunikation von Fig. 5 ergebende endliche Automat;
- Fig. 9: den minimalen Automaten, der sich bei maximaler Schwelle aus der Beispielkommunikation von Fig. 5 ergibt;
- Fig. 10: den maximalen Automaten, der sich bei minimaler Schwelle aus der Beispielkommunikation von Fig. 5 ergibt;

Wie Fig. 2, in der mit Fig. 1 übereinstimmende Teile mit den gleichen Bezugszeichen versehen sind, erkennen läßt, ist mit dem Kommunikationsmedium 10 ein Spuranalysator 12 so gekoppelt, daß er die über das Kommunikationsmedium 10 zwischen den Kommunikationspartnern A und B ausgetauschten Daten erfassen kann. Dabei liest der Spuranalysator 12 alle ausgetauschten Nachrichten mit, ohne sie zu verändern oder in sonstiger Weise auf die Kommunikation zwischen A und B Einfluß zu nehmen. Der Spuranalysator kennt zwar die verschiedenen Nachrichtentypen der Kommunikation, d.h. die Protokollsyntax, nicht jedoch den Protokollaufbau, d.h. wie die Nachrichten aufgebaut sind und wie die Nachrichtentypen von den beteiligten Kommunikationspartnern verwendet werden, um Kommunikationen durchzuführen. Der Spurenanalysator 12 kennt keine Referenzprotokolle.

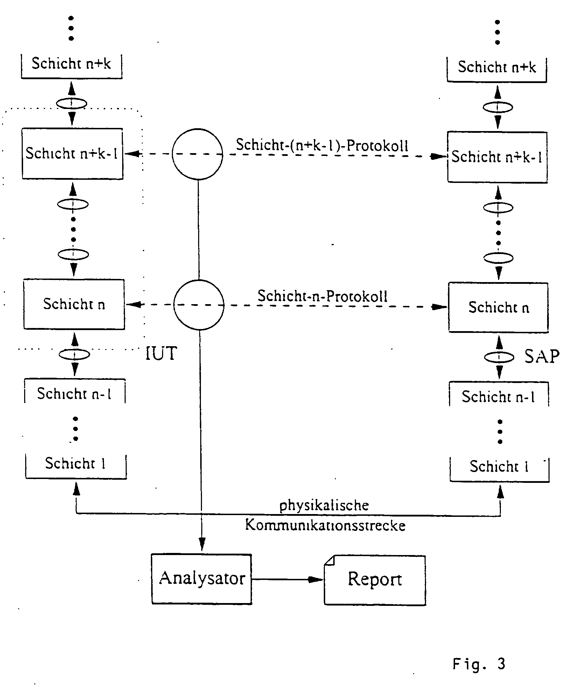

Fig. 3 zeigt die logische Einbindung des Analysealgorithmus in den Kommunikationsprozeß. Der Analysealgorithmus liest die PDUs einer Schicht n, n > 1 aus dem Protokollstapel und leitet aus dieser Beobachtung, wie nachfolgend ausgeführt, Regeln ab, die das korrekte Protokollverhalten beschreiben. Voraussetzung hierfür ist, daß sich alle Kommunikationsteilnehmer und die für den Transport der Schicht-n-PDUs verantwortlichen tieferen Protokollschichten protokollkonform verhalten. Der Spuranalysator erhält hierbei jedoch keinerlei Information über die an den Dienstzugangspunkten ausgetauschten Primitiven.

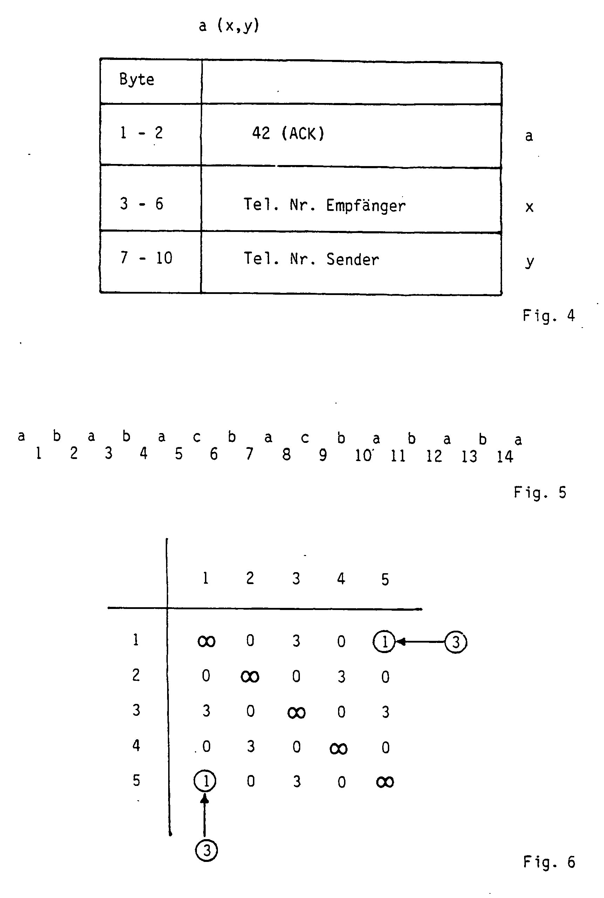

Fig. 4 zeigt beispielhaft den Aufbau einer PDU a(x, y). Hierbei bezeichnet a den Nachrichtentyp, während x und y Nachrichtenattribute, d.h. Daten betreffen. In dem dargestellten Beispiel wird mit dem ersten und zweiten Byte die Zahl 42 spezifiziert, was darauf hinweist, daß a vom Typ ACK ist. x bezeichnet mit dem dritten bis sechsten Byte die Telefonnummer des Empfängers, während y mit dem siebten bis zehnten Byte die Telefonnummer des Senders bezeichnet.

Fig. 5 zeigt eine beispielhafte Kommunikation zwischen der Instanz A und der Instanz B von Fig. 2. In diesem ersten Schritt sind zunächst nur die Nachrichtentypen von Interesse, wohingegen die Nachrichtenattribute momentan nicht betrachtet werden. Zwischen den Nachrichtentypen werden Zeitpunkte definiert, hier die Zeitpunkte 1 bis 14. Eine Ähnlichkeitsmatrix, siehe Fig. 6, wird nunmehr so erstellt, daß oben und links die Zeitpunkte der Beispielkommunikation aufgetragen werden. Zwischen jeweils zwei Zeitpunkten innerhalb der Beispielkommunikation wird der Wert in die Äquivalenzmatrix eingetragen, der der Länge der für beide Zeitpunkte übereinstimmenden, die Zeitpunkte umgebenden PDU-Typen-Sequenz entspricht.

Der Übersichtlichkeit halber ist in Fig. 6 die Ähnlichkeitsmatrix nicht für alle 14 Zeitpunkte, sondern lediglich für die ersten fünf Zeitpunkte angegeben. Da die jeweiligen Zeitpunkte mit sich selbst unmittelbar in allen vorausgehenden und allen nachfolgende Zeitpunkten übereinstimmen, ist die Diagonale mit "unendlich" gefüllt. Da die Ähnlichkeitsmatrix symmetrisch zur Diagonale ist, wird im folgenden nurmehr die rechte obere Hälfte näher betrachtet.

Betrachtet wird zunächst der Eintrag an der Position erste Reihe, zweite Spalte: Der Vorläufer von Zustand 1 ist ein a, während der Vorläufer von Zustand 2 ein b ist. Der Nachfolger des Zustands 1 ist ein b, während der Nachfolger des Zustands 2 ein a ist. Der in die Matrix einzutragende Wert ist daher 0.

Der Wert in der ersten Reihe, dritte Spalte ergibt sich wie folgt: Der Vorgänger des Zeitpunkts 1 ist ein a ebenso wie der Vorgänger des Zeitpunkts 3. Dem Zeitpunkt 1 folgt ebenso wie dem Zeitpunkt 3 die Folge b a. Damit ist der in die Matrix einzutragende Wert 3. In entsprechender Weise ergeben sich die übrigen Werte der Ähnlichkeitsmatrix.

Es gibt nun verschiedene Möglichkeiten, aus der Ähnlichkeitsmatrix Äquivalenzklassen abzuleiten:

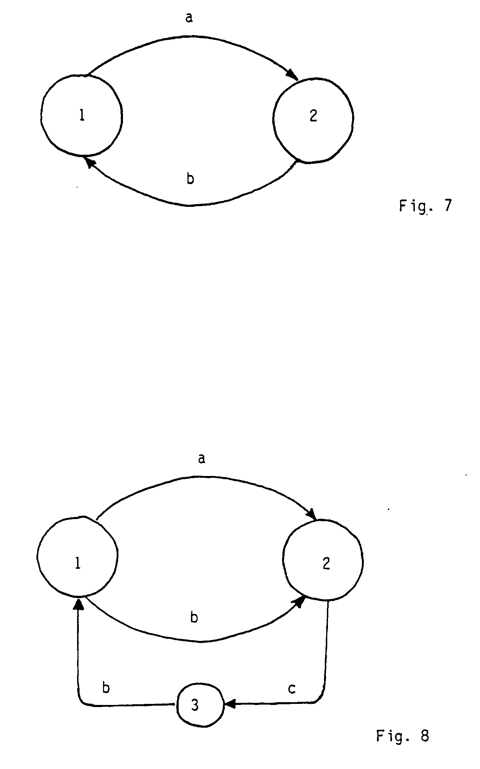

Gemäß einem ersten Weg werden zum Zusammenfassen der Ähnlichkeitsmatrix zu einer Äquivalenzmatrix alle Ähnlichkeiten über einer bestimmten Schwelle gesucht und die entsprechenden Zeitpunkte zu Zuständen eines endlichen Automaten zusammengefaßt, bis alle solche Ähnlichkeiten zwischen Zeitpunkten desselben Zustands bestehen. Beispielsweise lassen sich bei einer unteren Schwelle von 1 die Zustände 1, 3 und 5 zusammenfassen zu einem Zustand 1 und im Gegenzug können auch die Zustände 2 und 4 zu einem neuen Zustand 2 zusammengefaßt werden. Dann werden die PDUs der Beispielkommunikation als Zustandsübergänge des erlernten Automaten eingetragen, und zwar jeweils als Übergang von demjenigen Zustand, in dessen Äquivalenzklasse der Zeitpunkt unmittelbar vor der betreffenden PDU liegt, zu demjenigen Zeitpunkt, in dessen Äquivalenzklasse der Zeitpunkt unmittelbar nach der betreffenden PDU liegt, markiert mit dem betreffenden PDU-Typ. Der Zustandsgraph des zugehörigen endlichen Automaten und damit des zugehörigen Protokolls ist in Fig. 7 dargestellt.

Gemäß einer anderen Methode wird die Ähnlichkeitsmatrix solange mit sich selbst multipliziert, bis ein Endzustand, die sogenannte Äquivalenzmatrix, erhalten wird, aus der sich dann Äquivalenzklassen ableiten lassen. Die Matrixmultiplikation wird jedoch dahingehend verändert, daß Additionen durch die Bildung des Maximums, Multiplikationen durch die Bildung des Minimums der beiden Eingangsgrößen ersetzt werden. Gemäß diesem Weg sind in der Ähnlichkeitsmatrix von Fig. 6 die Einträge in der ersten Reihe, fünfte Spalte und fünfte Reihe, erste Spalte, wie mit Pfeilen angedeutet durch eine 3 zu ersetzen.

Gemäß einem dritten Weg wird eine Äquivalenzrelation zur Bildung der Äquivalenzklasse berechnet, indem die transitive Hülle einer Ähnlichkeitsrelation zwischen den Zeitpunkten innerhalb der Beispielkommunikation gebildet wird.

Zur Ermittlung von Äquivalenzklassen kann jedoch auch so vorgegangen werden, daß Äquivalenzmatrizen für verschiedene Schwellen ermittelt werden und dann die Schwelle verwendet wird, bei der die Anzahl der Zustände unter einem vorgegebenen Wert liegt.

Werden alle 14 Zeitpunkte der Beispielkommunikation von Fig. 5 ausgewertet, ergibt sich der in Fig. 8 dargestellte Regelbaum, d.h. der in Fig. 8 dargestellte endliche Automat.

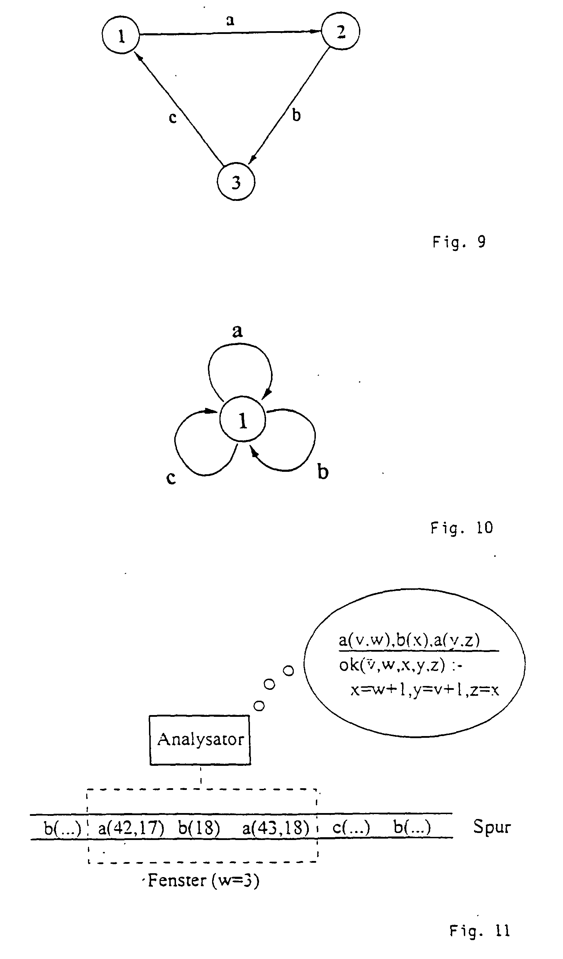

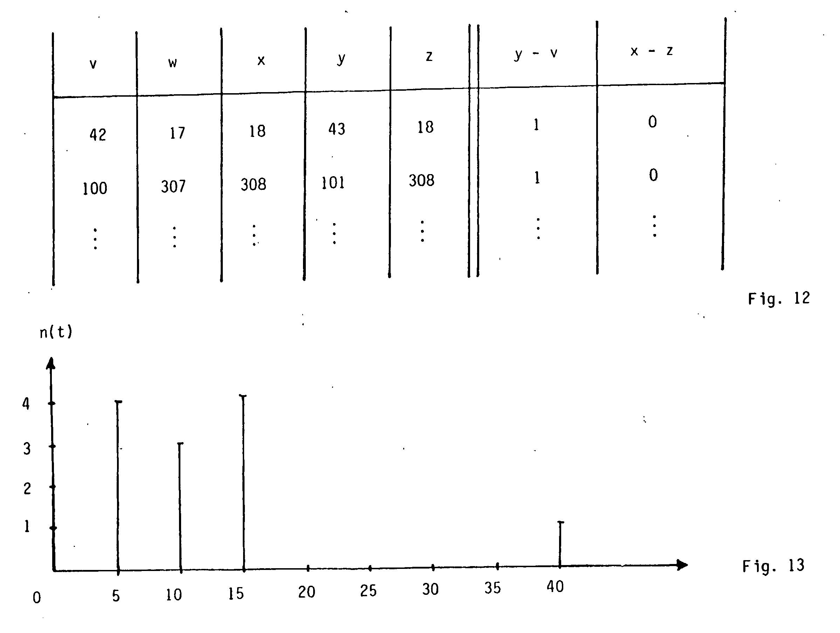

Die Figuren 9 und 10 zeigen die beiden sich in Abhängigkeit der Wahl der Schwelle ergebenden Extrema für den endlichen Automaten. Fig. 9 den minimalen Automaten bei maximal hoher Schwellenwahl, Fig. 10 den maximalen Automaten bei minimal kleiner Schwellenwahl. Um insbesondere den Rechenaufwand niedrig zu halten, können die jeweiligen Verfahrensschritte mehrfach für überlappende Teilbereiche der Beispielkommunikation durchgeführt werden, wobei die Ähnlichkeitsrelationen jeweils zweier überlappender Teilbereiche zu einer gemeinsamen Äquivalenzrelation vereinigt werden. Ein bevorzugter Überlappungsbereich ist eine Überlappung von 30% - 50%.

## Patentansprüche

1. Verfahren zum Erlernen des einer Protokollimplementierung zugrundeliegenden endlichen Automaten,
mit folgenden Schritten:
a) Definition von Zeitpunkten (1, 2, 3) in einer Beispielkommunikation zwischen zwei jeweils aufeinanderfolgenden Protokolldateneinheiten PDU, wobei die Beispielkommunikation PDU-Typen (a, b, c) umfasst;
b) Zusammenfassen der Zeitpunkte (1, 2, 3) innerhalb der Beispielkommunikation in Äquivalenzklassen durch Berechnung eines Ähnlichkeitsmaßes zwischen jeweils zwei Zeitpunkten innerhalb der Beispielkommunikation, das von der Länge der für beide Zeitpunkte übereinstimmenden, die Zeitpunkte umgebenden PDU-Typensequenz abhängt; und
c) Verwenden der Äquivalenzklassen als Zustände des erlernten Automaten.

2. Verfahren nach Anspruch 1,
wobei das Ähnlichkeitsmaß die Summe der Anzahl der für beide Zeitpunkte übereinstimmenden PDU-Typen vor dem Zeitpunkt und der Anzahl der für beide Zeitpunkte übereinstimmenden PDU-Typen nach dem Zeitpunkt angibt.

3. Verfahren nach einem der Ansprüche 1 oder 2,
wobei eine Ähnlichkeitsrelation durch eine untere Schranke für den Wert eines Ähnlichkeitsmaßes zwischen jeweils zwei Zeitpunkten innerhalb der Beispielkommunikation so definiert wird, dass zwei Zeitpunkte die Ähnlichkeitsrelation erfüllen, wenn das Ähnlichkeitsmaß zwischen diesen beiden Zeitpunkten größer oder gleich der unteren Schranke ist.

4. Verfahren nach einem der vorhergehenden Ansprüche,
wobei eine Äquivalenzrelation zur Bildung der Äquivalenzklassen berechnet wird, indem die transitive Hülle einer Ähnlichkeitsrelation zwischen den Zeitpunkten innerhalb der Beispielkommunikation gebildet wird.

5. Verfahren nach einem der Ansprüche 1 bis 4,
wobei die PDUs der Beispielkommunikation als Zustandsübergänge des erlernten Automaten eingetragen werden, und zwar jeweils als Übergang von demjenigen Zustand, in dessen Äquivalenzklasse der Zeitpunkt unmittelbar vor der betreffenden PDU liegt, zu demjenigen Zustand, in dessen Äquivalenzklasse der Zeitpunkt unmittelbar nach der betreffenden PDU liegt, markiert mit dem betreffenden PDU-Typ.

6. Verfahren nach Anspruch 5,
wobei Übergänge, die in Ausgangs- und Folgezustand und im PDU-Typ übereinstimmen, nur einmal eingetragen werden.

7. Verfahren nach einem der Ansprüche 3 bis 6, vorzugsweise nach der Kombination der Ansprüche 3 bis 6,
wobei die jeweiligen Verfahrensschritte mehrfach für überlappende Teilbereiche der Beispielkommunikation durchgeführt werden, wobei die Ähnlichkeitsrelationen jeweils zweier überlappender Teilbereiche zu einer gemeinsamen Äquivalenzrelation vereinigt werden.

## Claims

1. Method for learning the finite automaton underlying a protocol implementation,
including the steps of:
a) defining times (1, 2, 3) in an example communication between two respectively consecutive protocol data units PDU, where the example communication includes PDU types (a, b, c);
b) combining the times (1, 2, 3) within the example communication to equivalence classes by calculating a similarity measure between each two times within the example communication, which depends on the length of the PDU type sequence surrounding the times and matching for both times; and
c) using the equivalence classes as the states of the learned automaton.

2. Method according to claim 1,
wherein the similarity measure indicates the sum of the number of the PDU types matching for both times before the time and the number of the PDU types matching for both times after the time.

3. Method according to any one of claims 1 or 2,
wherein a similarity relation is defined by a lower boundary for the value of a similarity measure between each two times within the example communication such that two times satisfy the similarity relation, if the similarity measure between these two times is greater than or equal to the lower boundary.

4. Method according to any one of the preceding claims,
wherein an equivalence relation is calculated for forming the equivalence classes by forming the transitive envelope of a similarity relation between the times within the example communication.

5. Method according to any one of claims 1 to 4,
wherein the PDUs of the example communication are registered as state transitions of the learned automaton, respectively as a transition from that state, in the equivalence class of which the time immediately before the concerned PDU is, to that state, in the equivalence class of which the time immediately after the concerned PDU is, marked with the concerned PDU type.

6. Method according to claim 5,
wherein transitions matching in initial and following states and in the PDU type are registered only once.

7. Method according to any one of claims 3 to 6, preferably according to the combination of claims 3 to 6,
wherein the respective method steps are performed multiple times for overlapping partial regions of the example communication, wherein the similarity relations of each two overlapping partial regions are combined to a common equivalence relation.

## Revendications

1. Procédé d'apprentissage de l'automate final à la base d'une implémentation de protocole, comportant les étapes suivantes :
a) définition d'instants (1, 2, 3) dans une communication exemple entre deux unités de protocole PDU successives, les types de PDU de la communication exemple comprenant (a, b, c) ;
b) regroupement des instants (1, 2, 3) dans la communication exemple en classes d'équivalence par calcul d'une mesure de similitude entre deux instants dans la communication exemple qui dépend de la longueur de la séquence de type de PDU entourant les instants, concordants aux instants ; et
c) utilisation des classes d'équivalence en tant qu'états de l'automate appris.

2. Procédé selon la revendication 1,
dans lequel la mesure de similitude indique la somme du nombre de types de PDU concordants pour les deux instants avant l'instant et du nombre de types de PDU concordants pour les deux instants après l'instant.

3. Procédé selon l'une quelconque des revendications 1 ou 2,
dans lequel une relation de similitude est définie de manière telle par une limite inférieure pour la valeur d'une mesure de similitude entre chaque fois deux instants dans la communication exemple que deux instants répondent à la relation de similitude lorsque la mesure de similitude entre ces deux instants est supérieure ou égale à la limite inférieure.

4. Procédé selon l'une quelconques des revendications précédentes,
dans lequel une relation d'équivalence est calculée pour former les classes d'équivalence, en ce que la fermeture transitive d'une relation de similitude entre les instants dans la communication exemple est formée.

5. Procédé selon l'une quelconques des revendications 1 à 4,
dans lequel les PDU de la communication exemple sont inscrites en tant que transitions d'état de l'automate appris et, en l'occurrence, chaque fois en tant que transition de l'état dont, dans sa classe d'équivalence, l'instant figure directement avant la PDU concernée, vers l'état dont, dans sa classe d'équivalence, l'instant figure directement après la PDU concernée, marquées du type de PDU concerné.

6. Procédé selon la revendication 5,
dans lequel les transitions qui concordent en état de départ et d'arrivée et en type PDU ne sont inscrites qu'une seule fois.

7. Procédé selon l'une quelconques des revendications 3 à 6, de préférence selon la combinaison de revendications 3 à 6,
dans lequel les étapes de procédés correspondantes sont parcourues plusieurs fois pour des zones partielles se recouvrant de la communication exemple, les relations de similitude de chaque fois deux zones partielles se recouvrant étant unifiées en une relation d'équivalence commune.
